# EUROPEAN PATENT SPECIFICATION

(11) **EP 0 472 964 B1**
(45) Date of publication and mention of the grant of the patent: **11.12.1996**
(21) Application number: 91113223.1
(22) Date of filing: 06.08.1991
(51) Int. Cl.: G03H 1/18, G02B 5/32

(54) **Diffraction efficiency control in holographic elements**
Regulierung des Beugungswirkungsgrads eines holographischen Elements
Contrôle de l'efficacité de diffraction d'un élément holographique

(30) Priority: 31.08.1990 US 576558
(43) Date of publication of application: 04.03.1992
(73) Proprietor: Hughes Aircraft Company, Los Angeles, California 90045-0066 (US)
(72) Inventor: Moss, Gaylord E., Marina del Try, California 90292 (US); Wreede, John E., Monrovia, California 91016 (US); Yu, Kevin H., Temple City, California 91780 (US)
(74) Representative: Grünecker, Kinkeldey, Stockmair & Schwanhäusser Anwaltssozietät

(56) References cited:
- EP-A- 0 350 014
- WO-A-86/05286
- GB-A- 2 226 421
- PATENT ABSTRACTS OF JAPAN vol. 9, no. 6 (P-326)(1729) 11 January 1985 & JP-A-59 154 482

## Description

This present invention is directed generally to hologram exposure techniques, and is directed more particularly to an exposure technique for controlling the effective hologram diffraction efficiency while setting the exposure and processing variables to give the hologram maximum efficiency, according to the preamble portions of claims 1 and 4.

The generic Patent Abstract of Japan JP-A-59-154 482 describes a hologram and its preparation, comprising the steps of forming in a layer a grating by exposing same to laser beams and preparing a mask for masking the use area, whereby UV illumination is provided for reproving the grating in selected areas.

The patent application GB-A-2 226 421 relates to holograms having in their marginal areas a decreasing net diffraction efficiency. This effect is obtained by recording the hologram through a mask.

In the manufacture of holograms such as those utilized for vehicle head-up display systems, it may be desirable to closely control hologram efficiency and bandwidth within narrow limits to meet the required optical performance. This is due to the interrelationships between parameters including diffraction efficiency, see-through and angular bandwidth.

However, reproducibility of holograms having the desired efficiency and bandwidth is difficult due to the extreme sensitivity of hologram performance to a variety of factors in the recording process. Some of these factors include:
1. Recording material: age, storage conditions, pre-exposure hardening, molecular composition and moisture content.
2. Chemical processing: temperature, time, agitation, chemical concentration and subsequent drying conditions.
3. Laser exposure: beam power, time, coherence length, beam ratio and mechanical stability.
With present techniques, it is difficult to precisely control all of these parameters, and manufacturing yield tends to be quite low.

Present techniques to meet tight diffraction efficiency requirements are directed to precisely controlling the hologram manufacturing parameters. However, such tight control is extremely difficult to achieve with some materials such as dichromated gelatin, wherein recording involves molecular crosslinking that is non-linearly affected by such parameters as the organic molecular structure of animal protein, temperature, moisture content, laser exposure energy, gelation rate during film coating, previous history of the gelatin molecules, rate of dehydration after wet processing, swelling of the gelatin during processing, and others.

Presently, the recording medium thickness is selected to provide the desired bandwidth, then all other fabrication parameters are selected and controlled to give the desired diffraction efficiency. In particular, a diffraction efficiency vs. effective exposure curve indicates the relationship of diffraction efficiency to effective exposure, wherein the effective exposure level includes all the variables in recording material, laser exposure and chemical processing. In view of the number of exposure variables and their non-linearity and sensitivity to many factors, attempting to control diffraction efficiency by tightly controlling exposure parameters is exceedingly difficult.

It would therefore be an advantage to provide a hologram exposure technique which provides for tight diffraction efficiency control accurately and reproducibly despite large variations and non-linearities in the holographic recording materials and processes.

The foregoing and other advantages are provided by the features of claims 1 and 4. It is provided by

the invention in a method for exposing a hologram that includes the steps of (a) defining a mask having opaque and transparent areas wherein the proportion of the opaque areas relative to the transparent areas is selected pursuant to the desired diffraction efficiency, the opaque and transparent areas being sufficiently small so as to have little noticeable effect when the resulting hologram is played back, (b) applying the mask to a hologram recording medium, (c) exposing the hologram recording medium to non-coherent illumination whereby only the areas exposed by the apertures are exposed to the non-coherent illumination, (d) removing the mask, and (e) exposing the hologram recording medium to hologram forming illumination at an effective exposure that yields maximum hologram efficiency. Such effective exposure can be in the saturated region of the efficiency vs. exposure curve wherein changes in efficiency as a function of parameter variation are small.

The advantages and features of the disclosed invention will readily be appreciated by persons skilled in the art from the following detailed description when read in conjunction with the drawing wherein:

FIG. 1 is a schematic pre-exposure arrangement in accordance with the invention.

FIG. 2 schematically illustrates a mask pattern that can be utilized with the pre-exposure arrangement of FIG. 1.

FIG. 3 is a typical index of diffraction vs. exposure curve for dichromated gelatin recording material.

FIG. 4 sets forth diffraction efficiency vs. wavelength curves for dichromated gelatin hologram recording media of different thicknesses for effective exposure in the saturated region of the diffraction index vs. exposure curve of FIG. 3.

### DETAILED DESCRIPTION OF THE DISCLOSURE

In the following detailed description and in the several figures of the drawing, like elements are identified with like reference numerals.

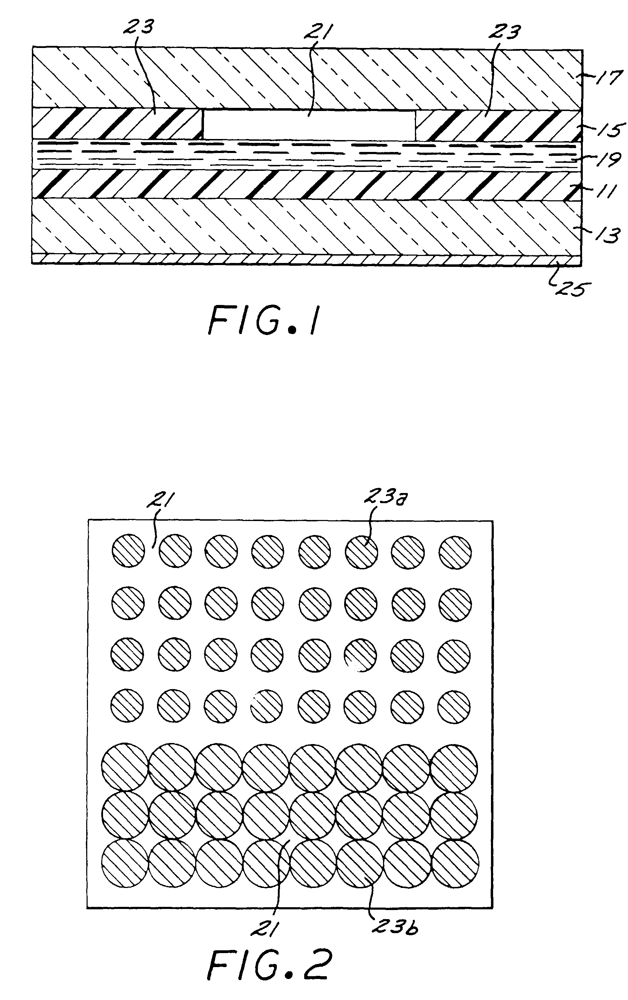

Referring now to FIG. 1, shown therein is an exposure arrangement in accordance with the invention for pre-exposing a holographic recording medium 11 so as to desensitize selected areas of the recording medium where no hologram is wanted. The holographic recording medium 11 is supported by a substrate 13, and a contact mask 15 overlays the holographic recording medium 11. The contact mask 15 is supported by a transparent mask substrate 17.

The mask 15 includes a plurality of opaque areas 23 separated by transparent areas 21. The transparent areas 21 may be filled with refractive index matching fluid or transparent volumes of the same material as the substrate 17. The opaque and transparent areas of the mask are sufficiently small such that they cannot be individually readily resolved by the human eye at the distance from which the hologram is to be viewed.

The mask 15 is coupled to the holographic recording medium 11 with an index matching fluid 19 to prevent reflections from scattering into the recording medium under the opaque areas 23 of the mask 15. Such reflections would add an unwanted noise hologram and reduce the available index of refraction for the holographic recording. For the same purpose, an appropriate coating 25 is placed on the the bottom of the substrate 13. The coating 25 can be an absorptive coating to absorb light after it has passed through the hologram recording medium 11, or it can be an anti-reflection coating for coupling light after it has passed through the hologram recording medium. The anti-reflection coating need not be formed directly on the bottom of the substrate 13, but could be attached to an additional plate (not shown) which is then index matched to the substrate 13.

With the pre-exposure arrangement of FIG. 1, non-coherent illumination is directed through the mask 15 to the holographic recording medium 11. As a result of the mask, only those areas of the hologram recording medium 11 in registry with the transparent areas 21 are exposed to the incident non-coherent illumination. Pursuant to such exposure, such areas in the recording medium are desensitized by being exposed to saturation, and holograms cannot be formed therein.

In accordance with the invention, the hologram forming areas will be exposed, after removal of the mask, in a manner that provides a known diffraction efficiency for the hologram forming areas that is consistently reproducible. The net overall diffraction efficiency of the hologram structure is selected by controlling the proportion or percentage of the areas of the recording medium which are hologram forming (i.e., the areas protected during the initial incoherent exposure by the opaque areas of the mask), relative to the total area of use. Stated another way, net overall diffraction efficiency is selected by controlling the ratio of the opaque and transparent mask areas 23, 21. For example, for a hologram that can be consistently produced for 90% efficiency in the hologram forming areas, an overall diffraction efficiency requirement of 45% would call for hologram exposure of only 50% of the area of interest. In other words, the opaque areas of the mask would comprise 50% of the total area of use.

Depending upon the application, the proportion of opaque areas can be fixed or constant over the entire area of use, or it can vary with position so as to provide for diffraction efficiency that varies as a function of position on the area of use.

By way of illustrative example and with reference to FIG. 2, the mask 15 comprises a pattern of opaque dots 23a, 23b with dot spacing sufficiently small to be unresolvable by the viewer. As particularly shown in FIG. 2, the variation of diffraction efficiency as a function of position on the hologram is readily achieved in the design of the exposure mask pattern that sets the dot pattern size. The centers of the opaque dots 23a, 23b are generally equally spaced and therefore the hologram area corresponding to the mask area having the smaller opaque dots 23a would have less diffraction efficiency and better see-through that the hologram area corresponding to the mask area have the larger opaque dots 23b.

While FIG. 2 illustrates circular opaque areas, it should be appreciated that other patterns such as square, rectangles, and other polygons could be used. Linear shapes could also be utilized. As a further alternative, the transparent areas can comprise the pattern of dots, squares, rectangles, and so forth.

The invention basically contemplates areas in a hologram structure that are selectively processed to have either (a) a consistently reproducible diffraction efficiency (defined by the mask opaque areas), or (b) zero diffraction efficiency (defined by the mask non-opaque areas).

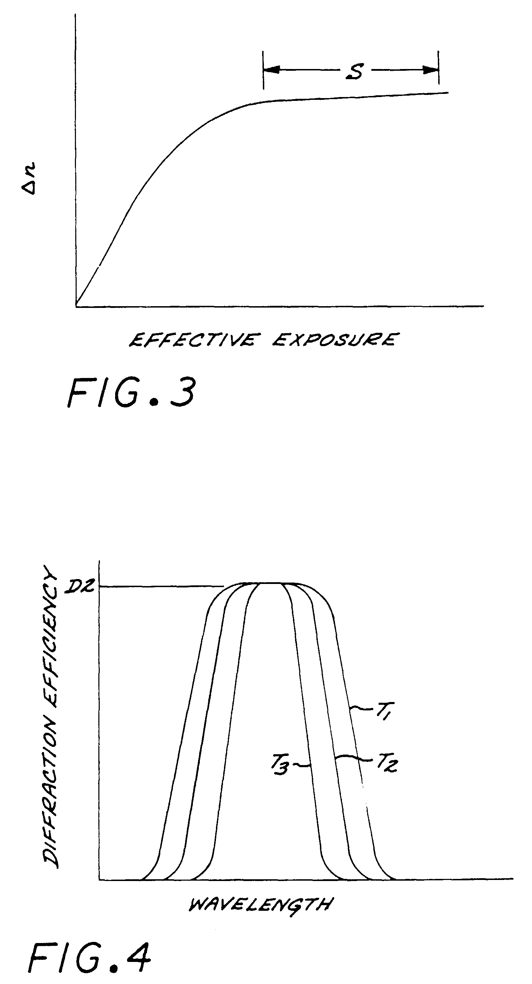

After the pre-exposure to non-coherent illumination, the mask 15 is removed, and the hologram recording medium 11 is exposed to hologram forming illumination pursuant to known techniques. For example, the hologram forming exposure can be with interfering object and reference beams, or with a master hologram and coherent illumination. Referring now to FIG. 3, shown therein is a response curve for dichromated gelatin hologram recording material showing index range (delta n) vs. effective exposure. Diffraction efficiency is directly related to the index range, and therefore the curve of FIG. 3 is indicative of diffraction efficiency. Effective exposure includes all variables in recording material, laser exposure, and chemical processing. In accordance with the invention, the hologram forming exposure can be made in the saturated region S of the response curve where variations in effective exposure have a very small effect on the index range delta n, and thus a very small effect on diffraction efficiency.

In this manner, localized diffraction efficiency in the hologram exposure is precisely controlled and can be consistently reproduced, and overall net diffraction efficiency is precisely controlled by the percentage or ratio of hologram forming areas as defined by opaque areas of the mask 15.

FIG. 4 is helpful in illustrating the consistency of overall diffraction efficiency achieved with the exposure technique of the invention, and schematically depicts the bandwidth curves for a plurality of thicknesses T1, T2, T3 of dichromated gelatin hologram recording material as exposed in the saturation region of the index range vs. effective exposure curve. For a reasonable range of thicknesses, the resulting maximum localized diffraction efficiencies of the hologram exposed areas are close to the same level D2. Thus, with the technique of the invention, the desired bandwidth is utilized to select the thickness of the recording medium, and the desired net overall efficiency is utilized to select the percentage of area of the recording material that is exposed to hologram forming exposure that is in the saturated region of the index/exposure response curve for that material.

It will be readily appreciated that the basic scheme of the invention can be implemented in a number of ways. For example, instead of pre-exposing the hologram in particular areas to make them transparent, the hologram could be exposed via a mask to incoherent light after holographic exposure, but before processing. The incoherently exposed areas that correspond to the transparent mask areas are thereby saturated so as to eliminate the differences between the peaks and nulls in the diffraction pattern of the recorded hologram in such incoherently exposed areas. It is noted, however, that this technique will work only with those recording materials that allow such saturation, such as dichromated gelatin.

In all of these methods, as well as numerous other possibilities, the essential feature of "full-on" or "full-off" diffraction efficiency is retained, which is important to obtaining reproducible macro diffraction efficiency.

While the initial exposure mask 15 can be constructed separately on its own substrate and then applied to the recording layer 11, it can also be constructed as an additional layer on the recording layer 11 for desensitizing exposure that can take place before or after hologram forming exposure, as described above. Forming an integral mask on the recording material would provide an advantage in applications where the recording substrate is curved, and might also reduce manufacturing cost by eliminating procedures required for a separately constructed mask as well as the requirement for index matching to prevent reflections at the separate mask substrate.

By way of illustrative example, the integral exposure mask is constructed as follows.

A layer of photoactive polymer such as positive photoresist is applied to the recording layer. The photoactive polymer is then exposed with light in a pattern that corresponds to the final desired mask, for example by exposure through a master mask or exposure with a dot or line scan pattern that is controlled by a computer driven position for either the beam spot or the substrate that includes the recording layer and the photoactive polymer layer. The polymer in the regions that have been exposed is then removed, for example by chemical processing.

The resulting integral mask comprises a thin layer disposed on the recording layer and in contact therewith, and desensitization can then take place, for example pursuant to incoherent exposure as described previously. After desensitization, the integral mask is removed.

In addition to the foregoing illustrative examples that have been directed to exposing and processing the recording medium into the saturation region in which the holographic parameters change less with manufacturing variables, diffraction efficiency control in accordance with the invention is advantageously utilized in situations where the hologram is not formed by exposure and processing into the saturation region.

For example, a fixed exposure process that has been set to give a reproducible set of finished hologram parameters can be used for different hologram applications, wherein for each application the diffraction efficiency would be set as appropriate to work with the fixed exposure process to achieve the hologram parameters desired for that application. The use of a fixed exposure process for different applications would eliminate one of the main causes of low yield in prior methods, which is the need to change the exposure process for each application, with the nonlinearities in most recording materials causing difficult-to-predict results from each process change. In large scale manufacturing processes, diffraction efficiency control as disclosed would allow simpler and less expensive equipment to maintain an optimized standard process.

As a further example, the advantages of easily controlled spatial variation of hologram efficiency over the surface of the hologram with a constant exposure over the entire hologram, as described previously, can be achieved with or without saturating the material. The use of a fixed process as described above for different hologram applications would apply to holograms having spatially varied efficiencies as well as to holograms having substantially spatially constant efficiencies.

From the foregoing, it can be seen that the hologram exposure technique of the invention provides for the tight control of overall net diffraction efficiency of holograms, and provides for the production of holograms having consistent and reproducible diffraction efficiencies.

Although the foregoing has been a description and illustration of specific embodiments of the invention, various modifications and changes thereto can be made by persons skilled in the art without departing from the scope of the invention as defined by the following claims.

## Claims

1. A method of exposing hologram recording material having a predetermined area of use to achieve a predetermined net overall diffraction efficiency for said predetermined area, the method comprising the steps of:
desensitizing selected areas of the hologram recording material in the use area so that holograms cannot form in such areas, whereby the remaining areas of the use area are hologram forming areas;
exposing the use area to hologram forming imaging illumination at a predetermined exposure level that provides a predetermined local diffraction efficiency in the hologram forming areas,
**characterized** in that the desensitizing step comprises
the further steps of:
applying a photosensitive polymer layer on the recording material;
exposing the photosensitive polymer with a pattern corresponding to the areas to be desensitized such that the polymer layer is removable from the selected areas to be desensitized;
processing the photosensitive polymer layer to remove the layer portions from the selected areas to be desensitized so as to form a mask covering the areas not to be desensitized; and
exposing the hologram recording material to non-coherent illumination so as to saturate the unmasked areas.

2. The method of claim 1, characterized in that the step of desensitizing selected areas comprises the step of:
masking the polymer layer on the hologram forming areas; and
exposing the hologram recording material to non-coherent illumination as defined in claim 1.

3. The method of claim 1, characterized in that the step of exposing to hologram forming illumination includes the step of exposing at an exposure level that will provide substantially maximum diffraction efficiency for the hologram forming areas.

4. A method of exposing hologram recording material having a predetermined area of use to achieve a predetermined net overall diffraction efficiency for said predetermined area, the method comprising the steps of:
exposing the use area to hologram forming imaging illumination at a predetermined exposure level that provides a predetermined local diffraction efficiency in areas where hologram will be formed;
desensitizing selected areas of the use area so that holograms cannot form in such areas, whereby the remaining areas of the use area are hologram forming areas,
**characterized** in that the desensitizing step comprises
the further steps of:
applying a photosensitive polymer layer on the recording material;
exposing the photosensitive polymer with a pattern corresponding to the areas to be desensitized such that the polymer layer is removable from the selected areas to be desensitized;
processing the photosensitive polymer layer to remove the layer portions from the selected areas to be desensitized so as to form a mask covering the areas not to be desensitized; and
exposing the hologram recording material to non-coherent illumination so as to saturate the unmasked areas.

5. The method of claim 4, characterized in that the step of desensitizing selected areas comprises the steps of:
masking the polymer layer on the hologram forming areas; and
exposing the hologram recording material to non-coherent illumination as defined in claim 4.

6. The method of claim 1
**characterized** in that
in the desensitizing method step, the percentage of the hologram forming areas relative to the total use area is selectively varied with position over the area of use so that net overall diffraction efficiency varies with position over the area of use.

7. The method of claim 6, characterized in that the step of desensitizing selected areas comprises the steps of:
masking the hologram recording material with a mask having transparent areas that define the areas to be desensitized and opaque areas that define the hologram forming areas, wherein the percentage of the opaque areas relative to the total use area is selectively varied with position; and exposing the hologram recording material to non-coherent illumination as defined in claim 1.

8. The method of claim 4, characterized in that the step of exposing to hologram forming illumination includes the step of exposing at an exposure level that will provide substantially maximum diffraction efficiency for the hologram forming areas.

9. The method of claim 4,
**characterized** in that
in the desensitizing, the percentage of hologram forming areas relative to the total use area is selectively varied with position over the area of use so that net overall diffraction efficiency varies with position over the area of use desensitizing selected areas of the use area so that holograms cannot form in such areas, whereby the remaining areas of the use area are hologram forming areas.

10. The method of claim 9, wherein the step of desensitizing selected areas comprises the steps of:
masking the hologram recording material with a mask having transparent areas that define the areas to be desensitized and opaque areas that define the hologram forming areas , wherein the percentage of the opaque areas relative to the total use area is selectively varied with position; and
exposing the hologram recording material to non-coherent illumination as defined claim 4.

11. The method of claim 9, characterized in that the step of exposing to hologram forming illumination includes the step of exposing at an exposure level that will provide substantially maximum diffraction efficiency for the hologram forming areas.

## Patentansprüche

1. Verfahren zur Belichtung von Hologramm-Aufzeichnungsmaterial, das eine vorbestimmte Nutzfläche hat, um einen vorbestimmten Netto-Gesamtbeugungswirkungsgrad für die vorbestimmte Fläche zu erhalten, wobei die Methode die folgenden Schritte umfaßt:
Unempfindlichmachen ausgewählter Flächen des Hologramm-Aufzeichnungsmaterials in der Nutzfläche, so daß Hologramme in diesen Flächen nicht gebildet werden können, wobei die verbleibenden Flächen der Nutzfläche Hologrammbildungsflächen sind;
Belichten der Nutzfläche mit Hologramm-formender Bildungsbeleuchtung mit einem vorbestimmten Belichtungsniveau, das einen vorbestimmten lokalen Beugungswirkungsgrad in den Hologrammbildungsflächen bereitstellt,
**dadurch gekennzeichnet**, daß der Schritt zur Unempfindlichmachung folgende weitere Schritte umfaßt:
Aufbringen einer photoempfindlichen Polymerschicht auf dem Aufzeichnungsmaterial;
Belichten des photoempfindlichen Polymers mit einem Muster, das den Flächen, die unempfindlich gemacht werden sollen, entspricht, so daß die Polymerschicht von den ausgewählten Flächen, die unempfindlich gemacht werden sollen, entfernbar ist;
Prozessieren der photoempfindlichen Schicht, um die Schichtteile von den ausgewählten Flächen, die unempfindlich gemacht werden sollen, zu entfernen, um eine Maske zu bilden, die die Flächen bedeckt, die nicht unempfindlich gemacht werden sollen; und
Belichten des Hologramm-Aufzeichnungsmaterials mit nicht-kohärenter Beleuchtung, um die unmaskierten Flächen zu sättigen.

2. Verfahren nach Anspruch 1, **dadurch gekennzeichnet**, daß der Schritt des Unempfindlichmachens ausgewählter Flächen den folgenden Schritt umfaßt:
Maskieren der Polymerschicht auf den Hologrammbildungsflächen; und
Belichten des Hologramm-Aufzeichnungsmaterials mit nicht-kohärenter Beleuchtung, wie in Anspruch 1 bestimmt.

3. Verfahren nach Anspruch 1, **dadurch gekennzeichnet**, daß der Schritt der Belichtung mit Hologramm-bildender Beleuchtung den Schritt der Belichtung mit einem Belichtungsniveau umfaßt, das im wesentlichen einen maximalen Beugungswirkungsgrad für die Hologrammbildungsflächen liefert.

4. Verfahren zur Belichtung von Hologramm-Aufzeichnungsmaterial, das eine vorbestimmte Nutzfläche hat, um einen vorbestimmten Netto-Gesamtbeugungswirkungsgrad für die vorbestimmte Fläche zu erhalten, wobei das Verfahren die folgenden Schritte umfaßt:
Belichten der Nutzfläche mit Hologramm-formender Bildbeleuchtung mit einem vorbestimmten Belichtungsniveau, das einen vorbestimmten lokalen Beugungswirkungsgrad in den Flächen liefert, wo Hologramme geformt werden sollen;
Unempfindlichmachung ausgewählter Flächen der Nutzfläche, so daß Hologramme in diesen Flächen nicht gebildet werden können, wobei die verbleibenden Flächen der Nutzfläche Hologrammbildungsflächen sind,
**dadurch gekennzeichnet**, daß der Schritt der Unempfindlichmachung folgende weitere Schritte umfaßt:
Aufbringen einer photoempfindlichen Polymerschicht auf dem Aufzeichnungsmaterial;
Belichten des photoempfindlichen Polymers mit einem Muster, das den Flächen entspricht, die unempfindlich gemacht werden sollen, so daß die Polymerschicht von den Flächen, die unempfindlich gemacht werden sollen, entfernbar ist;
Prozessieren der photoempfindlichen Polymerschicht, um die Schichtteile von den ausgewählten Flächen, die unempfindlich gemacht werden sollen, zu entfernen, um eine Maske zu bilden, die die Flächen bedeckt, die nicht unempfindlich gemacht werden sollen; und
Belichten des Hologramm-Aufzeichnungsmaterials mit nichtkohärenter Beleuchtung, um die unmaskierten Flächen zu sättigen.

5. Verfahren nach Anspruch 4, **dadurch gekennzeichnet**, daß der Schritt der Unempfindlichmachung ausgewählter Flächen den folgende Schritt umfaßt:
Maskieren der Polymerschicht auf den Hologrammbildungsflächen; und
Belichten des Hologramm-Aufzeichnungsmaterials mit nichtkohärenter Beleuchtung, wie in Anspruch 4 bestimmt.

6. Verfahren nach Anspruch 1, **dadurch gekennzeichnet**, daß bei dem Verfahrensschritt der Unempfindlichmachung der Prozentsatz der Hologrammbildungsflächen relativ zu der gesamten Nutzfläche selektiv mit der Position über der Nutzfläche variiert, so daß der Netto-Gesamtbeugungswirkungsgrad mit der Position auf der Nutzfläche variiert.

7. Verfahren nach Anspruch 6, **dadurch gekennzeichnet**, daß der Schritt der Unempfindlichmachung ausgewählter Flächen die folgenden Schritte umfaßt:
Maskieren des Hologramm-Aufzeichnungsmaterials mit einer Maske, die durchsichtige Flächen, die die Flächen bestimmen, die unempfindlich gemacht werden sollen, und undurchsichtige Flächen, die die Hologrammbildungsflächen bestimmen, hat, wobei der Prozentsatz der undurchsichtigen Flächen relativ zur Gesamtfläche selektiv mit der Position variiert; und
Belichten des Hologramm-Aufzeichnungsmaterials mit nichtkohärenter Beleuchtung, wie in Anspruch 1 bestimmt.

8. Verfahren nach Anspruch 4, **dadurch gekennzeichnet**, daß der Schritt der Belichtung mit Hologramm-bildender Beleuchtung den Schritt der Belichtung mit einem Belichtungsniveau umfaßt, das im wesentlichen einen maximalen Beugungswirkungsgrad für die Hologrammbildungsflächen liefert.

9. Verfahren nach Anspruch 4, **dadurch gekennzeichnet**, daß bei dem Unempfindlichmachen der Prozentsatz der Hologrammbildungsflächen relativ zu der gesamten Nutzfläche selektiv mit der Position über der Nutzfläche variiert, so daß der Netto-Gesamtbeugungswirkungsgrad mit der Position auf der Nutzfläche variiert und ausgewählte Flächen der Nutzfläche unempfindlich gemacht werden, so daß Hologramme in solchen Flächen nicht gebildet werden können, wobei die verbleibenden Flächen der Nutzfläche Hologrammbildungsflächen sind.

10. Verfahren nach Anspruch 9, wobei der Schritt der Unempfindlichmachung ausgewählter Flächen die folgenden Schritte umfaßt:
Maskieren des Hologramm-Aufzeichnungsmaterials mit einer Maske, die transparente Flächen hat, die die Flächen, die unempfindlich gemacht werden sollen, bestimmen, und die undurchsichtige Flächen hat, die die Hologrammbildungsflächen bestimmen, wobei der Prozentsatz der undurchsichtigen Flächen relativ zur Gesamtnutzfläche selektiv mit der Position variiert; und
Belichten des Hologramm-Aufzeichnungsmaterials mit nichtkohärenter Beleuchtung, wie in Anspruch 4 bestimmt.

11. Verfahren nach Anspruch 9, **dadurch gekennzeichnet**, daß der Schritt der Belichtung mit Hologramm-bildender Beleuchtung den Schritt der Belichtung mit einem Belichtungsniveau umfaßt, das im wesentlichen einen maximalen Beugungswirkungsgrad für die Hologrammbildungsflächen liefert.

## Revendications

1. Procédé d'exposition d'un matériau d'enregistrement d'hologramme ayant une zone d'utilisation prédéterminée, pour obtenir un rendement de diffraction global résultant prédéterminé pour cette zone prédéterminée, le procédé comprenant les étapes suivantes :
on désensibilise des zones sélectionnées du matériau d'enregistrement d'hologramme dans la zone d'utilisation, de façon que des hologrammes ne puissent pas être formés dans de telles zones, grâce à quoi les zones restantes de la zone d'utilisation sont des zones de formation d'hologramme;
on expose la zone d'utilisation à une illumination d'image de formation d'hologramme, à un niveau d'exposition prédéterminé qui donne un rendement de diffraction local prédéterminé dans les zones de formation d'hologramme,
caractérisé en ce que l'étape de désensibilisation comprend les étapes supplémentaires suivantes :
on applique une couche de polymère photosensible sur le matériau d'enregistrement;
on expose le polymère photosensible avec un motif correspondant aux zones à désensibiliser, de façon que la couche de polymère puisse être enlevée des zones sélectionnées à désensibiliser;
on traite la couche de polymère photosensible pour enlever les parties de la couche se trouvant dans les zones sélectionnées à désensibiliser, afin de former un masque recouvrant les zones qui ne doivent pas être désensibilisées; et
on expose le matériau d'enregistrement d'hologramme à une illumination non cohérente, de façon à saturer les zones non masquées.

2. Procédé selon la revendication 1, caractérisé en ce que l'étape de désensibilisation de zones sélectionnées comprend l'étape suivante :
on masque la couche de polymère sur les zones de formation d'hologramme; et
on expose le matériau d'enregistrement d'hologramme à une illumination non cohérente, comme défini dans la revendication 1.

3. Procédé selon la revendication 1, caractérisé en ce que
l'étape d'exposition à une illumination de formation d'hologramme comprend l'étape d'exposition à un niveau d'exposition qui produira un rendement de diffraction pratiquement maximal pour les zones de formation d'hologramme.

4. Procédé d'exposition d'un matériau d'enregistrement d'hologramme ayant une zone d'utilisation prédéterminée, pour obtenir un rendement de diffraction global résultant prédéterminé pour cette zone prédéterminée, le procédé comprenant les étapes suivantes :
on expose la zone d'utilisation à une illumination d'image de formation d'hologramme, à un niveau d'exposition prédéterminé qui donne un rendement de diffraction local prédéterminé dans des zones dans lesquelles un hologramme sera formé;
on désensibilise des zones sélectionnées de la zone d'utilisation, de façon que des hologrammes ne puissent pas être formés dans ces zones, grâce à quoi les zones restantes de la zone d'utilisation sont des zones de formation d'hologramme;
caractérisé en ce que l'étape de désensibilisation comprend les étapes supplémentaires suivantes :
on applique une couche de polymère photosensible sur le matériau d'enregistrement;
on expose le polymère photosensible avec un motif correspondant aux zones à désensibiliser, de façon que la couche de polymère puisse être enlevée des zones sélectionnées à désensibiliser;
on traite la couche de polymère photosensible de façon à enlever les parties de couche dans les zones sélectionnées à désensibiliser, afin de former un masque recouvrant les zones qui ne doivent pas être désensibilisées; et
on expose le matériau d'enregistrement d'hologramme à une illumination non cohérente, de façon à saturer les zones non masquées.

5. Procédé selon la revendication 4, caractérisé en ce que l'étape de désensibilisation de zones sélectionnées comprend les étapes suivantes :
on masque la couche de polymère sur les zones de formation d'hologramme; et
on expose le matériau d'enregistrement d'hologramme à une illumination non cohérente, comme défini dans la revendication 4.

6. Procédé selon la revendication 1,
caractérisé en ce que
dans l'étape de procédé de désensibilisation, le pourcentage des zones de formation d'hologramme, par rapport à la zone d'utilisation totale, est changé sélectivement avec la position dans la zone d'utilisation, de façon que le rendement de diffraction global résultant varie avec la position dans la zone d'utilisation.

7. Procédé selon la revendication 6, caractérisé en ce que l'étape de désensibilisation de zones sélectionnées comprend les étapes suivantes :
on masque le matériau d'enregistrement d'hologramme avec un masque ayant des zones transparentes qui définissent les zones à désensibiliser, et des zones opaques qui définissent les zones de formation d'hologramme, le pourcentage des zones opaques par rapport à la zone d'utilisation totale étant changé sélectivement avec la position; et
on expose le matériau d'enregistrement d'hologramme à une illumination non cohérente, comme défini dans la revendication 1.

8. Procédé selon la revendication 4, caractérisé en ce que l'étape d'exposition à une illumination de formation d'hologramme comprend l'étape d'exposition à un niveau d'exposition qui donnera un rendement de diffraction pratiquement maximal pour les zones de formation d'hologramme.

9. Procédé selon la revendication 4,
caractérisé en ce que
dans la désensibilisation, le pourcentage des zones de formation d'hologramme, par rapport à la zone d'utilisation totale, est changé sélectivement avec la position dans la zone d'utilisation, de façon que le rendement de diffraction global résultant varie avec la position dans la zone d'utilisation au cours de la désensibilisation de zones sélectionnées de la zone d'utilisation, de façon que des hologrammes ne puissent pas se former dans de telles zones, grâce à quoi les zones restantes de la zone d'utilisation sont des zones de formation d'hologramme.

10. Procédé selon la revendication 9, dans lequel l'étape de désensibilisation de zones sélectionnées comprend les étapes suivantes :
on masque le matériau d'enregistrement d'hologramme avec un masque ayant des zones transparentes qui définissent les zones à désensibiliser, et des zones opaques qui définissent les zones de formation d'hologramme, le pourcentage des zones opaques par rapport à la zone d'utilisation totale étant changé sélectivement avec la position; et
on expose le matériau d'enregistrement d'hologramme à une illumination non cohérente, comme défini dans la revendication 4.

11. Procédé selon la revendication 9, caractérisé en ce que l'étape d'exposition à une illumination de formation d'hologramme comprend l'étape d'exposition à un niveau d'exposition qui donnera un rendement de diffraction pratiquement maximal pour les zones de formation d'hologramme.
